# EUROPEAN PATENT APPLICATION

(11) **EP 2 921 725 A1**
(43) Date of publication of application: **23.09.2015**
(21) Application number: 14160504.8
(22) Date of filing: 18.03.2014
(51) Int. Cl.: F16C 9/02, F16C 9/04

(54) **Friction minimized crank-drive**

(71) Applicant: ThyssenKrupp Metalúrgica Campo Limpo Ltda., 13231- 900 Campo Limpo Paulista SP (BR)
(72) Inventor: de Souza Rodrigues, Alex, 13211-407 Jd Santa Teresa - Jundiaí - SP (BR); Luis Antonio, Fonseca Galli, 13106-006 Sousas - Campinas -SP (BR); Stuani Alves, Diogo, 13084-767 Barao Geraldo - Campinas - SP (BR)
(74) Representative: Braun-Dullaeus Pannen Patent- und Rechtsanwälte

(57) **Abstract**

The present invention relates to a crank-drive (1) of an internal combustion machine with a crank-shaft (2) having at least one main bearing journal (3) with a surface (4) for supporting the crank-shaft (2) in a crank-housing and having at least one pin bearing journal (5) with a surface (6) for connecting a connecting rod (7) to the crank-shaft (2), and with a piston (8) having a piston bearing journal (9) with a surface (10) for connecting the piston (8) to the connecting rod (7). According to the invention at least one of the surfaces (4, 6, 10) features at least one recess area (11) extending in a circumferential direction of the surfaces (4, 6, 10) over a circumferential angle (α1, α2) in a range from 20° to 120°.

## Description

The present invention relates to a crank-drive of an internal combustion machine with a crank-shaft having at least one main bearing journal with a surface for supporting the crank-shaft in a crank-housing and having at least one pin bearing journal with a surface for connecting a connecting rod to the crank-shaft, and with a piston having a piston bearing journal with a surface for connecting the piston to the connecting rod.

### PRIOR ART

FR 2 847 314 teaches chamfers in the surfaces of the bearing journals in order to provide a stress discharge in the crank-shaft of an internal combustion machine. The chamfers are performed score-like and are positioned neighboring to the transition of the cylindrical bearing journal into the crank-web. The positions of the chamfers are determined by computer-numerical calculations based on the parameters of the crank-shaft of the engine, and the maximum stresses in the connecting zone between the bearing journal and the crank-web can be reduced. The friction of the crank-drive with bearing journals featuring score-like chamfers in the surface of the bearing journals cannot be reduced, and in particular the minimization of friction is not taught within the disclosure.

EP 2 636 914 A1 discloses a sliding bearing with a bearing surface featuring convexo-concave portions which are respectively formed in the center portion and the end portions of the bearing surface, and the average height of vertexes of convex portions in the center portion is set smaller than the average height of vertexes of convex portions in the end portions. This surface design leads to the improvement of common formability and an increase in a load capacity in the end portions. Consequently, it is possible to attain a reduction in friction without sacrificing the conformability and the load capacity.

In order to reduce friction in sliding bearings, JP 2005 069 249 A teaches a hard carbon coating on at least one of the bearing surfaces, and the coating is applied by a DLC-thin film coating. The sliding bearing is according to the embodiment a bearing within a crank-drive. But the achievable reduction of friction is limited to a few percent, and coatings are often not fatigue endurable over a longer lifetime of a crank-drive.

### DISCLOSURE OF INVENTION

Thus, the invention has the objective to increase the amount of reduction in friction of a crank-drive and in particular of a sliding bearing as a part of a crank-drive.

This objective is achieved by a crank-drive as taught by claim 1 and is achieved by a crank-shaft as taught by claim 8 of the present invention. Preferred embodiments of the invention are defined by the sub-claims.

The invention provides a crank-drive of an internal combustion machine with a crank-shaft having at least one main bearing journal with a surface for supporting the crank-shaft in a crank-housing and having at least one pin bearing journal with a surface for a connecting a connecting rod to the crank-shaft, and with a piston having an piston bearing journal with a surface for connecting the piston to the piston rod, whereas at least one of the surfaces features at least one recess area extending in a circumferential direction of the surfaces over a circumferential angle in a range from 20° to 120°.

When at least one recess area is applied in the surface of at least one of the bearing journals, the journal features a portion of material removed out of the surface of the cylindrical journal. According to a preferred embodiment the recess area forms a circumferential section of the journal with a reduced radius, but the ground surface in the recess area can be formed cylindrical as well as the untreated surface of the bearing journal, and in this area of a reduces radius the oil film is interrupted. As an advantage, the circumferential section of the recess area has the same width with regard to the rotation axis relating to the width of the untreated surface of the bearing journal. Thus, the recess area can be applied in the surface of the main bearing journal and/or the pin bearing journal and/or the piston bearing journal.

The recess area leads to an interruption of the oil film from the sliding partner, in particular the outer bearing ring, in the following named the bearing shell, by increasing the clearance, leading to a decrease of the power loss which is induced by the sliding movement in the tribological system.

Within the spirit of invention the surface of the at least one bearing journal can be formed by the cylindrical outer surface of the bearing journals as a part of the crank-shaft and/or as a part of the piston bearing journal, formed by the piston bold. And in the same way the invention also encloses at least one recess area in the bearing shell formed by the crank-housing, a shell insert part or formed by the small or the big end bore of the connecting rod. A recess area in the outer bearing part leads to the same effect of interrupting the oil film from the bearing partner, which leads to the reduction of friction according to the invention.

According to another embodiment of the invention at least one of the surfaces can feature coatings, texturing like dimples and/or can be treated or protected to allow a good lubrication under working phases, which reduces wear effects inside the material absence areas and on the sliding surface.

The journal surfaces can comprise recesses which can be designed in all radial directions on the journal with respect to the rotation axis. As another positive effect the recesses can reduce the incidence of stress concentration regions.

The bearing journals of the crank-shaft and/or the piston extend in an axial direction according to a rotation axis of the crank-shaft, whereas at least one recess area is applied substantially over the entire axial width of the bearing journal. In order to optimize the reduction of friction, it is proposed to design the recess areas as wide as the axial length of the bearing journals or at least approximately as wide as the axial length of the bearing journals, so that the recess area extends over the entire length of the bearing journals, e. g. the recess area can pass over into the chamfer forming the transition into the crank-web.

According to another improved embodiment in at least one of the bearing journal surfaces are arranged two recess areas, in particular opposing or nearly opposing to each other. The recess areas in one bearing journal surface can feature the same or different dimensions, depending on the dynamic force situation of the single journal. In different bearing journals, for example to support the crank-shaft in the crank-housing or to connect a connecting rod to the crank-shaft, each position and dimension of the recess areas can be adapted to the local force and stress situation of the single journal.

In order to interrupt the oil film between the sliding partners of a bearing, it is sufficient to keep the depth of the recess in the surface of the bearing journal as small as possible. In particular, the at least one recess area in the bearing journal surface can feature a depth of at least 0,05 mm and preferably of at least 0,1 mm.

In particular crank-drives of heavy duty internal combustion machines must feature a high torsional stiffness, and in this applications where a higher crank-shaft performance is needed, for instance in heavy duty engines, the decrease of torsional stiffness can be a critical point for the component failure. Thus, it is proposed to design the recess areas as micro profiles of about 0,1 mm or a few 100 microns, which already lead to an interruption of the oil film between the sliding partners of the bearings.

According to another preferred embodiment of the present invention the circumferential directed transition of the recess areas into the untreated surface of the bearing journals may feature a sequence of radii. The material absence region comprising a sequence of radii on the edges of the recess area allow a reduction of stress concentrations, which need to be avoided.

Bearing journals in crank-drives feature high pressure load areas whereas with respect to the circumference the at least one recess area is located lateral to the high pressure load area. In particular bearing journals of a crank-shaft feature two main pressure load areas determined by the varying mechanical stress over the full cycle of the internal combustion engine. From the time variating load, an average hydrodynamic pressure can be defined for points around the perimeter of the sliding bearing and, based on the maximum average pressure it could be determined percentages of this maximum average pressure and points which are below this value. These points, that represent a fraction of the shaft surface, could be neglected for the slider bearing normal operation. From a maximum of e.g. 50% of maximum average pressure, one defines as preferential 30% of maximum average pressure to determine the material absence points that will be removed on the shaft surface areas, allowing up to 42% of material absence regions over the entire circumference of the bearing journal.

The high pressure load is generated mainly due to the gas pressure forces of the internal combustion, but another high pressure load bases on inertia forces of the piston and the connecting rod, in particular in the top dead center and/or in the bottom dead center.

Due to the presence of high pressure load areas in the circumference of the bearing journals, the circumferential extension of at least one of the recess areas is limited. The circumferential extension can range from 20° to 120°, preferred from 30° to 110°, more preferred from 40° to 100° and most preferred from 50° to 95°, but the optimum circumferential extension is depending on the local stress situation of the bearing journal and is depending on the kind of bearing journal, e.g. if the bearing journal forms the main- the pin- or the piston bearing jornal.

In the bearing journals of the crank-shaft the recess areas may feature a circumferential extension of at least 20° to 20°, whereas the circumferential extensions of two or more recesses over the circumferential extension of one bearing journal can be different to each other.

The present invention also relates to a crank-shaft for a crank-drive of an internal combustion machine having at least one main bearing journal with a surface for supporting the crank-shaft in a crank-housing and having at least one pin bearing journal with a surface for connecting a connecting rod to the crank-shaft, whereas at least one of the surfaces features at least one recess area extending in a circumferential direction of the surfaces over a circumferential angle in a range from 20° to 120°. The further features and dedicated advantages of the features which are described in conjunction with the crank-drive above are also applicable for the crank-shaft as claimed.

### PREFFERED EMBODIMENT OF THE INVENTION

Additional details, characteristics and advantages of the object of the invention are disclosed in the sub-claims and the following description of the respective figures, which show a preferred embodiment in an exemplary fashion of the subject matter according to the invention in conjunction with the accompanying figures, in which
- figure 1: shows a cross sectioned side view of parts of a crank-drive the present invention can be applied to,
- figure 2a: shows an axial view of a pin bearing journal according to a first embodiment with two recess areas applied in the surface,
- figure 2b: shows a side view of the pin bearing journal according to figure 2a,
- figure 3: shows a side view of a part of a crank-shaft according to a second embodiment with a main bearing journal featuring recess areas,
- Figure 4: shows an axial view of the crank-shaft along the cutting line I - I according to figure 3,
- Figure 5: shows a side view of a part of a crank-drive according to a third embodiment with a pin bearing journal featuring recess areas,
- Figure 6: shows an axial view of the crank shaft along the cutting line II - II according to figure 5,
- Figure 7: shows another embodiment of a part of a crank-shaft in a side view according to a fourth embodiment with a main bearing journal featuring recess areas and
- Figure 8: shows an axial view of the crank shaft along the cutting line III - III according to figure 7.

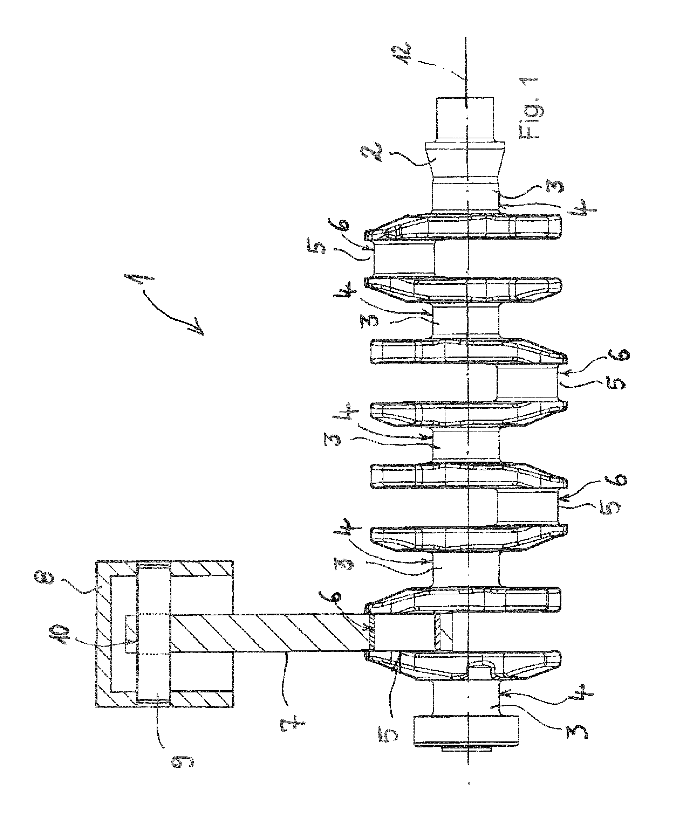

Figure 1 shows a crank-drive 1 of an internal combustion machine with a crank-shaft 2, a connecting rod 7 and a piston 8, the latter comprising a piston bearing journal 9. The crank-shaft 2 is rotatable supported in a - not shown - crank-housing, and the crank-shaft 2 can perform a rotatory motion in the rotation axis 12. When the crank shaft 2 rotates, the piston 8 performs a reciprocating up- and down-movement, whereas the connecting rod 7 performs a crank-movement.

The crank-shaft 2 features five main bearing journals 3 for supporting the crank-shaft 2 in the crank-housing and the crank-shaft 2 features pin bearing journals 5 for connecting connecting rods 7 with crank-shaft 2, whereas only one connecting rod 7 with only one piston 8 is shown, and the crank shaft 2 features four pin bearing journals 5. Accordingly, the crank-drive is performed for a 4- cylinder internal combustion engine and forms only one embodiment which is thought to be representative for any kind of crank- drives for reciprocating internal combustion engines.

Each of the main bearing journals 3 feature a cylindrical surface 4 and each of the pin bearing journals 5 feature a cylindrical surface 6. The interconnection between the small eye of the connecting rod 7 and the piston 8 comprises a piston bearing journal 9 with a surface 10, and the piston bearing journal 9 extends in the same direction like the rotation axis 12 as shown by the dashed midline in the piston bearing journal 9 extending parallel to the rotation axis 12.

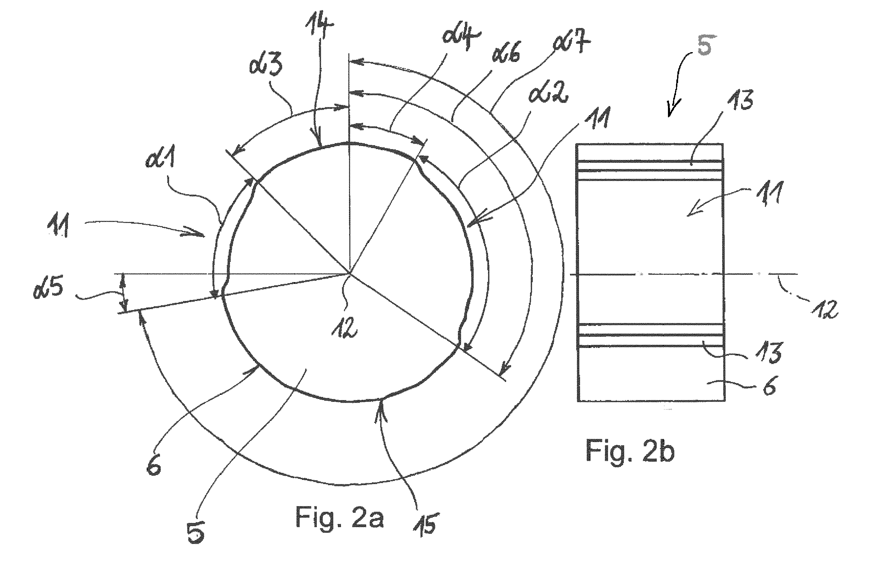

In figure 2a to figure 8 are depicted different embodiments of recess areas in the surfaces of different the bearing journals within the crank-drive 1 and the positions and the circumferential angles of the recess areas are shown relative to the Top Dead Center TDC as embodiments only.

The position, the dimensions and in particular the extending of the recess areas in the circumferential direction depend on the entire design of the crank-drive 1 and may vary in multiple different ways.

Figures 2a and 2b show an embodiment of a pin bearing journal 5, and the pin bearing journal 5 in figure 2a is depicted in the direction of the rotation axis 12 and in figure 2b the pin bearing journal 5 is depicted in a view sidewise to the rotation axis 12 extending horizontally in the depiction plane. The pin bearing journal 5 features a surface 6, and in the surface 6 are located two recess areas 11, which are located lateral to high pressure load areas 14 and 15.

With respect to the top dead center TDC the recess area 11 on the left side of the rotation axis 12 begins with a circumferential angle α7 of 260° and ends with a circumferential angle α3 with 45° before the TDC. Accordingly, the circumferential angle α1 amounts approximately 55°. On the right side relative to the rotation axis 12 a second recess area 11 is applied in the surface 6 of the pin bearing journal 5, and the recess area 11 features a circumferential angle α2 with a value of 95°. The recess area 11 begins with a circumferential angle α4 of 30° and ends with a circumferential angle α6 of 125° in a clockwise direction beginning at the TDC.

Figure 2b shows the pin bearing journal 5 with the recess area 11 on the right side of the rotation axis 12 as shown in figure 2a, and the transition of the recess area 11 into the untreated surface 6 features a sequence of radii 13, and effected by the sequence of radii 13 the stress concentration on the edge of the surface 6 transiting into the recess area 11 is minimized.

The recess area 11 extends over the entire width of the bearing journal 5 and features a depth of e.g. 0,1mm. The surface of the recess areas 11, as shown in figure 2a, is formed with a cylindrical surface and compared to the cylindrical surface of the untreated areas lateral to the recess area, as determined with the high pressure areas 14 and 15, the diameter of the surface is reduced in order to interrupt the oil film by forming a clearance between the sliding partners in the tribological system. The recess area can be machined by cutting machining or preferred by an etching technology.

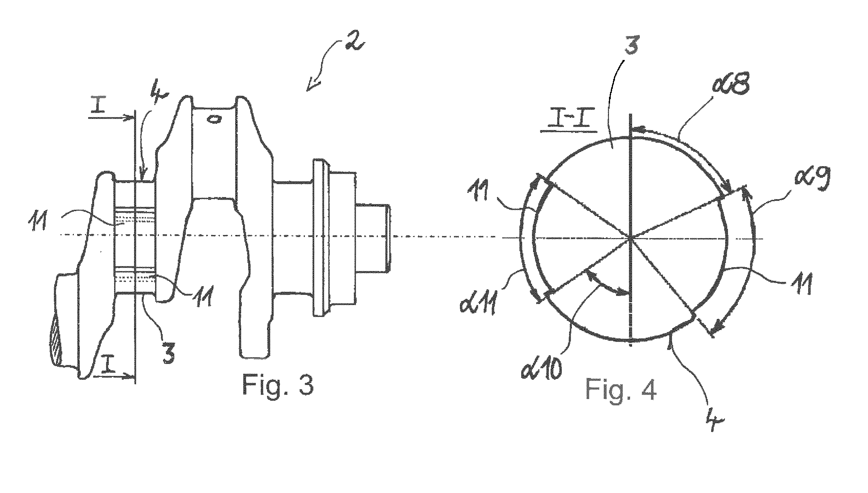

Figure 3 shows a part of a crank-shaft 2 with a main bearing journal 3 having a surface 4 featuring recess areas 11, and figure 4 shows the main bearing journal 3 in a cross-section along the cutting line I - I. The recess areas 11 are arranged opposing to each other, and the recess area 11 on the right side begins with a circumferential angle α8 of 65° and features an extension of the circumferential angle α9 with an value of 75°. The recess area 11 on the left side features an extension with a circumferential angle α11 of 70°. The circumferential angle α10 amounts 55°.

This embodiment shows that a main bearing journal 3 can feature two recess areas 11 in opposing positions, as they already are shown in the embodiment according to figure 2a and 2b.

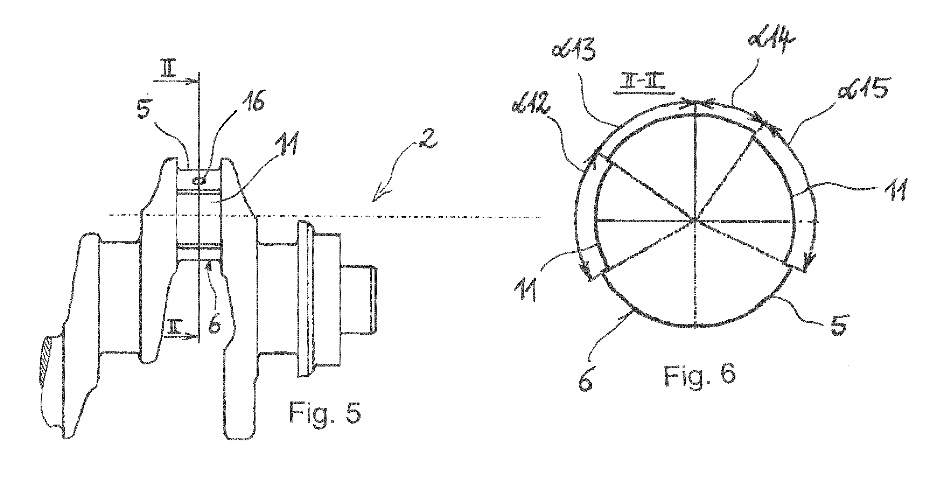

Figure 5 shows a part of a crank-shaft 2 with another embodiment of recess areas 11 in the surface 6 of the pin bearing journal 5, and figure 6 shows a cross-section of the pin bearing journal 5 along the cutting line II - II. Two recess areas 11 are applied in the surface 6 of the pin bearing journal 5, and the recess area 11 on the right side begins with a circumferential angle α14 of 35° with a circumferential angle α15 of 80°. The recess area 11 on the left side begins with a circumferential angle α13 of 55° and extends with a circumferential angle α12 of 65°. Figure 5 shows an oil hole 16 for lubricating the pin bearing journal 5, and the recesses 11 are arranged neighboring to the oil hole 16.

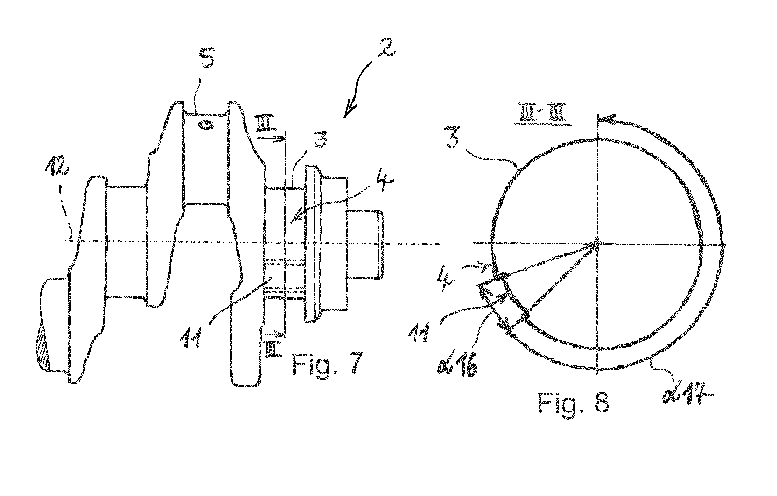

Figure 7 shows a part of a crank-shaft 2 with a main bearing journal 3 featuring a surface 4 with a recess area 11, and the main bearing journal 3 forms the end bearing of the crank-shaft 2 for a rotatable supporting the crank-shaft 2 in the rotation axis 12.

The cross-section of the main bearing journal 3 along the cutting line III - III is depicted in figure 8, and only one recess area 11 is located in the surface 4 in a position of a circumferential angle α17 of 225° and the recess area 11 features a circumferential angle of α16 with a value of 25° in the surface 4 of the main bearing journal 3.

The different embodiments of main bearing journals 3 and pin bearing journals 5 show, that the number and the position as well as the circumferential angle of the different recess areas 11 depend on the position of the bearing journal 3, 5 in the crank-drive 1. Accordingly, different positions and dimensions of recess areas 11 are applicable in the scope of protection, and the recess areas 11 feature a circumferential angle in the range from about 20° to 120°. Advantageously, the depth of the recess area amounts at least 0,05 mm and preferably at least 0,1 mm, and the width of the recess areas 11 correspond to the axial length of the bearing journals 3, 5.

As shown with different bearing journals 3 and 5 in conjunction with the crank-shaft 2 in the surface 10 of the piston bearing journal 9 to connect the piston 8 to the connecting rod 7, one or more recess areas can be applied in the surface 10 of the piston bearing journal 9.

The numbers of the angles α 1 to α 17 as depicted and as described in conjunction with the figures above are related to the Top Dead Center TDC for the first piston 8 as shown in figure 1.

The present invention is not limited to the embodiment described above, which is represented as an example only and can be modified in various ways within the scope of protection defined by the depending patent claims.

### List of numerals

- 1: crank-drive
- 2: crank-shaft
- 3: main bearing journal
- 4: surface
- 5: pin bearing journal
- 6: surface
- 7: connecting rod
- 8: piston
- 9: piston bearing journal
- 10: surface
- 11: recess area
- 12: rotation axis
- 13: sequence of radii
- 14: high pressure load area
- 15: high pressure load area
- 16: oil hole
- TDC: Top Dead Center

- α1: circumferential angle Value: 55°
- α2: circumferential angle Value: 95°
- α3: circumferential angle Value: 45°
- α4: circumferential angle Value: 30°
- α5: circumferential angle Value: 10°
- α6: circumferential angle Value: 125°
- α7: circumferential angle Value: 260°
- α8: circumferential angle Value: 65°
- α9: circumferential angle Value: 75°
- α10: circumferential angle Value: 55°
- α11: circumferential angle Value: 70°
- α12: circumferential angle Value: 65°
- α13: circumferential angle Value: 55°
- α14: circumferential angle Value: 35°
- α15: circumferential angle Value: 80°
- α16: circumferential angle Value: 25°
- α17: circumferential angle Value: 225°

## Claims

1. A crank-drive (1) of an internal combustion machine with a crank-shaft (2) having at least one main bearing journal (3) with a surface (4) for supporting the crank-shaft (2) in a crank-housing and having at least one pin bearing journal (5) with a surface (6) for connecting a connecting rod (7) to the crank-shaft (2), and with a piston (8) having a piston bearing journal (9) with a surface (10) for connecting the piston (8) to the connecting rod (7), **characterized in that** at least one of the surfaces (4, 6, 10) features at least one recess area (11) extending in a circumferential direction of the surfaces (4, 6, 10) over a circumferential angle (α1, α2, α9, α11, α12, α15, α16) in a range from 20° to 120°.

2. A crank-drive (1) according to claim 1, **characterized in that** the bearing journals (3, 5, 9) of the crank-shaft (2) and/or the piston (8) extend in an axial direction according to a rotation axis (12) of the crank-shaft (2), whereas the at least one recess area (11) is formed substantially over the entire axial length of the bearing journals (3, 5, 9).

3. A crank-drive (1) according to claim 1 or 2, **characterized in that** in at least one bearing journal surface (4, 6, 10) are arranged two recess areas (11), in particular opposing to each other.

4. A crank- drive (1) according to one of the previous claims, **characterized in that** the at least one recess area (11) in the bearing journal surface (4, 6, 10) features a depth of at least 0,05 mm and preferably of at least 0,1 mm.

5. A crank- drive (1) according to one of the previous claims, **characterized In that** the circumferential directed transition of the recess areas (11) into the surface (4, 6, 10) features a sequence of radii (13).

6. A crank- drive (1) according to one of the previous claims, **characterized in that** the bearing journals (3, 5, 9) feature high pressure load areas (14, 15), whereas with respect to the circumference the at least one recess area (11) is located lateral to the high pressure load areas (14, 15).

7. A crank- drive (1) according to one of the previous claims, **characterized in that** the angle (α1, α2, α9, α11, α12, α15, α16) of the circumferential extension of at least one of the recess areas (11) range from 30° to 110°, preferred from 40° to 100° and most preferred from 50° to 95°.

8. A crank- shaft (2) for a crank-drive (1) of an internal combustion machine having at least one main bearing journal (3) with a surface (4) for supporting the crank-shaft (2) in a crank-housing and having at least one pin bearing journal (5) with a surface (6) for connecting a connecting rod (7) to the crank-shaft (2),
**characterized in that** at least one of the surfaces (4, 6) features at least one recess area (11) extending in a circumferential direction of the surfaces (4, 6) over a circumferential angle (α1, α2, α9, α11, α12, α15, α16) in a range from 20° to 120°.
